# EUROPEAN PATENT APPLICATION

(11) **EP 4 477 062 A1**
(43) Date of publication of application: **18.12.2024**
(21) Application number: 24179378.5
(22) Date of filing: 31.05.2024
(51) Int. Cl.: A01G 3/06, A01D 34/84, A01D 34/90

(54) **DEVICE FOR THE MAINTENANCE OF LANDS**

(30) Priority: 15.06.2023 IT 202300012363
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); D'AGOSTINI, Mauro, 35018 San Martino di Lupari (PD) (IT); ZANOLIN, Alessandro, 35010 Trebaseleghe (PD) (IT); ZONTA, Paolo, 31033 Castelfranco Veneto (TV) (IT); CALLEGARO, Antonio, 31100 Treviso (IT)
(74) Representative: PGA S.p.A.

(57) **Abstract**

Device for executing land maintenance operations comprising a stem extending along a respective longitudinal extension axis, a work head, a handle, drive controls configured for determining the activation of the work head, and an attachment system between the work head and stem configured to arrange the work head in a left transverse operating position in which the work head faces said left side of the device, or in a right transverse operating position in which said work head faces said right side of the device.

If a concavity of the handle faces the left side of the device, the attachment system is configured to allow the work head to be oriented in the right transverse operating position, and to prevent the work head from being oriented in the left transverse operating position.

## Description

### FIELD OF THE INVENTION

The present invention relates to a device for executing maintenance operations in lands or gardens, for example operations of mowing the turfgrass and/or pruning plants, such as shrubs or hedges.

### STATE OF THE ART

Cutting devices for executing maintenance operations, such as mowing turfgrass and pruning plants, such as pruning, for example pruning shrubs or hedges, are known in the field of gardening and land maintenance.

Such devices commonly comprise a knob which the operator grasps to handle the cutting device, e.g., to orient the device in the desired direction to execute the maintenance operations.

Such devices also comprise adjustable cutting heads so as to facilitate the maintenance operations: for example, the cutting head can be turned towards the ground G so as to mow the turfgrass, or it can be oriented towards a left side or a right side of the device, for example to execute a vertical pruning of hedges or shrubs. The work head, when oriented to the left or right, has a blade rotation axis having a component parallel to the ground G.

The handles of the prior art also have an open or closed profile, so that the operator can choose whether to position himself/herself on the left (LS) or right side of the device.

However, the Applicant notes that the cutting head, when oriented to the left or right, can lift debris and, therefore, cause risks for the operator.

The prior art also comprises devices comprising a control knob carrying drive controls adapted to allow the activation of the work head. However, the Applicant notes that the control knobs of the prior art are inconvenient for the operator and can cause the onset of muscle and skeletal pain in the operator, especially in the case of intensive use of the device.

### OBJECTS OF THE INVENTION

Therefore, the object of the present invention is to solve at least one of the drawbacks and/or limitations of the previous solutions.

A first objective is to provide a device for the maintenance of gardens and/or lands capable of protecting the operator during an operating condition of the device.

A further objective is to provide a cutting device for the maintenance of gardens and/or lands capable of protecting the operator from any debris raised by the cutting head.

A further objective is to provide a device for the maintenance of gardens and/or lands which is easy and comfortable to manoeuvre.

A further objective is to provide a cutting device for the maintenance of gardens and/or land capable of limiting the operator from incurring skeletal or muscular pain due to incorrect postural positions maintained during the maintenance operations.

A further objective is to provide a cutting device for the maintenance of gardens and/or lands capable of speeding up the maintenance operations.

These and other objects, which will appear more clearly from the following description, are substantially achieved by a device in accordance with one or more of the appended claims and/or the following aspects.

### SUMMARY

Particular aspects of the present invention are listed below, which aspects can be non-optional or optional aspects of the present invention. Each of the following aspects of the present invention can therefore form an appropriate basis for any amendments to the appended claims. It should be noted that the provision of dependent aspects cannot in any way be traced back to a presumption of limited validity of the independent claims, which, on the contrary, are believed to be all new and inventive in light of the state of the art.

A 1st aspect of the invention relates to a device (1) for executing maintenance operations in a land or garden, optionally suitable for use as a brush cutter or turf trimmer or hedge trimmer, said device (1) comprising:
- a stem (2) extending in length along a respective longitudinal extension axis (LA) between a first end portion (2a) and a second end portion (2b),
- a work head (10) configured to execute said maintenance operations and constrained to said stem (2) at the first end portion (2a) of the stem (2), said work head (10) comprising a work tool (11) rotatably movable about a respective rotation axis (RA),
- a handle (20) carried by said stem (2) and extending along a respective peripheral profile (21) away from said stem (2), said handle (20) being constrained to said stem (2) by means of a respective constraining portion (3),
- a control knob (30), carried by said handle (20), comprising:
   ∘ a main gripping portion (31) configured to be grasped by an operator to manoeuvre said device (1) during the maintenance operations,
   ∘ drive controls (40) configured to determine the activation of the work head (10) to execute said maintenance operations, said drive controls (40) of the control knob (30) being sufficient to determine, when kept simultaneously driven by a hand of the operator, the activation of the work head (10);
      and in which a reference plane (RP) is defined orthogonal to the ground (G) and comprising said longitudinal extension axis (LA) of the stem (2),
      in which, in a horizontal operating condition of the device (1):
- said reference plane (RP) is parallel to said rotation axis (RA) of the work tool (11), optionally in which said reference plane (RP) comprises said rotation axis (RA) of the work tool (11),
- said reference plane (RP) intersects said main gripping portion (31) of the control knob (30).

A 2nd aspect of the invention relates to a device (1) for executing maintenance operations in a land or garden, optionally suitable for use as a brush cutter or turf trimmer or hedge trimmer, said device (1) comprising:
- a stem (2) extending in length along a respective longitudinal extension axis (LA) between a first end portion (2a) and a second end portion (2b),
- a work head (10) configured to execute said maintenance operations and constrained to said stem (2) at the first end portion (2a) of the stem (2), said work head (10) comprising a work tool (11) rotatably movable about a respective rotation axis (RA),
- a handle (20) carried by said stem (2) and extending along a respective peripheral profile (21) away from said stem (2), said handle (20) being constrained to said stem (2) by means of a respective constraining portion (3),
- a control knob (30), carried by said handle (20), comprising:
   ∘ a main gripping portion (31) configured to be grasped by an operator to manoeuvre said device (1) during the maintenance operations,
   ∘ drive controls (40) configured to determine the activation of the work head (10) to execute said maintenance operations, said drive controls (40) of the control knob (30) being sufficient to determine, when kept simultaneously driven by a hand of the operator, the activation of the work head (10).

In a 3rd aspect according to the preceding aspect, a reference plane (RP) is defined orthogonal to the ground (G) and comprising said longitudinal extension axis (LA) of the stem (2).

In an aspect 3-bis according to any one of the preceding aspects 2 and 3, in a horizontal operating position of the device (1), said reference plane (RP) is parallel to said rotation axis (RA) of the work tool (11), optionally in which said reference plane (RP) comprises said rotation axis (RA) of the work tool (11).

In an aspect 3ter according to any one of the preceding aspects 2, 3 and 3bis, in a/said horizontal operating condition of the device (1), said reference plane (RP) intersects said main gripping portion (31) of the control knob (30).

A 4th aspect relates to a device (1) for executing maintenance operations in a land or garden, in particular suitable for use as a brush cutter or turf trimmer or hedge trimmer, said device (1) comprising:
- a stem (2) extending in length (L) along a respective longitudinal extension axis (LA) between a first end portion (2a) and a second end portion (2b),
   and in which said device (1) extends in width along a respective transverse axis (TA), orthogonal to said longitudinal extension axis (LA), between a respective left side (LS) and a respective right side (RS);
- a work head (10) configured to execute said maintenance operations, said work head (10) being constrained to said stem (2) at the first end portion (2a), and
- a handle (20) carried by said stem (2) and extending along a respective peripheral profile (21) away from said stem (2),
- a control knob (30), carried by said handle (20), comprising a main gripping portion (31) configured to be grasped by an operator,
- drive controls (40) configured to determine the activation of the work head (10) to execute said maintenance operations;
- an attachment system (60), interposed between the work head (10) and the first end portion (2a) of the stem (2), configured to arrange said work head (10) with respect to said stem (2) in:
   ∘ a left transverse operating position in which said work head faces towards said left side (LS) of the device,
      or in
   ∘ a right transverse operating position in which said work head faces towards said right side (RS) of the device,
      and in which said peripheral profile (21) of the handle (20) defines an open profile extending between a first end portion (20a), constrained to the stem (2) at a respective constraining portion (3), and a second free end portion (20b),
      said open profile defining a concavity (C) facing the left side (LS) or the right side (RS) of the device,
      and in which said device (1):
         - in a first alternative in which said concavity (C) faces the left side (LS) of the device, the attachment system (60) is configured for:
            ∘ allowing said work head (10) to be oriented in the right transverse operating position, and
            ∘ preventing said work head (10) from being oriented in the left transverse operating position;
         - in a second alternative in which said concavity (C) faces the right side (RS) of the device, the attachment system (60) is configured for:
            ∘ allowing said work head (10) to be oriented in the left transverse operating position, and
            ∘ preventing said work head (10) from being oriented in the right transverse operating position. In an aspect 4-bis according to the preceding aspect, said work head comprises a cutting tool (11) rotatably movable about a respective rotation axis (RA).

In an aspect 4-ter according to the preceding aspect, said work tool (11) is a cutting tool.

An aspect 4-quater relates to a device (1) for executing maintenance operations in a land or garden, in particular suitable for use as a brush cutter or turf trimmer or hedge trimmer, said device (1) comprising:
- a stem (2) extending in length (L) along a respective longitudinal extension axis (LA) between a first end portion (2a) and a second end portion (2b),
   and in which said device (1) extends in width along a respective transverse axis (TA), orthogonal to said longitudinal extension axis (LA), between a respective left side (LS) and a respective right side (RS);
- a work head (10) configured to execute said maintenance operations, said work head (10) being constrained to said stem (2) at the first end portion (2a),
- a handle (20) carried by said stem (2) and extending along a respective peripheral profile (21) away from said stem (2),
- a control knob (30), carried by said handle (20), comprising a main gripping portion (31) configured to be gripped by an operator, said control knob (30) extending in length between a first end (30a) facing said left side (LS) of the device and a second end (30b) facing said right side (RS) of the device;
- drive controls (40) configured to determine the activation of the work head (10) to execute said maintenance operations, said drive controls (40) comprising at least a first drive control (41) and a second drive control (42),
   wherein the device is configured for:
   ∘ activating the work head (10) if the first drive control (41) and the second drive control (42) are both simultaneously driven by the operator;
   ∘ preventing the activation of the work head (10) if at least one among the first drive control (41) and the second drive control (42) is not activated by the operator;
- an attachment system (60), interposed between the work head (10) and the first end portion (2a) of the stem (2), configured to arrange said work head (10) with respect to said stem (2) in:
   ∘ a left transverse operating position in which said work head faces towards said left side (LS) of the device,
      or in
   ∘ a right transverse operating position in which said work head faces towards said right side (RS) of the device,
   and in which:
   - in a first alternative, said second drive control (42) is interposed between said first drive control (41) and said second end (30b) of the control knob (30) according to the transverse axis (TA) of the device (1), and in which the attachment system (60) is configured for:
      ∘ allowing said work head (10) to be oriented in the right transverse operating position, and
      ∘ preventing said work head (10) from being oriented in the left transverse operating position;
   - in a second alternative, said second drive control (42) is interposed between said first drive control (41) and said first end (30a) of the control knob (30) according to the transverse axis (TA) of the device (1), and in which the attachment system (60) is configured for:
      ∘ allowing said work head (10) to be oriented in the left transverse operating position, and
      ∘ preventing said work head (10) from being oriented in the right transverse operating position.

In an aspect 4-quinquies according to the preceding aspect, said peripheral profile (21) of the handle (20) defines an open profile extending between a first end portion (20a), constrained to the stem (2) at a respective constraining portion (3), and a second free end portion (20b),
said open profile defining a concavity (C) facing the left side (LS) or the right side (RS) of the device,
and in which:
   - in the alternative, said concavity (C) faces the left side (LS) of the device,
   - in the second alternative, said concavity (C) faces the right side (RS) of the device.

In a 5th aspect according to any one of the preceding aspects, said control knob (30) is configured to allow the operator to grasp said main gripping portion (31) of the control knob (30) with one hand and, simultaneously and with the same hand, to reach and drive said drive controls (40) to determine the activation of the work head (10).

In a 6th aspect according to any one of the preceding aspects, said drive controls (40) of the control knob (30) comprise at least a first drive control (41) and a second drive control (42), in which the device is configured for:
- activating the work head (10) if the first drive control (41) and the second drive control (42) are both driven by the operator;
- preventing the activation of the work head (10) if at least one of the first drive control (41) and the second drive control (42) is not driven by the operator.

In a 7th aspect according to the preceding aspect, said control knob (30) is configured to allow the operator to grasp said main gripping portion (31) of the control knob (30) with one hand and, simultaneously and with the same hand, to reach and drive said first and said second drive control (42) to determine the activation of the work head (10).

In an 8th aspect according to any one of the preceding aspects from 6, said first drive control (41) is positioned on said main gripping portion (31) of the control knob (30), and said second drive control (42) is positioned to the side of said main gripping portion (31) of the control knob (30).

In a 9th aspect according to any one of the preceding aspects from 6, a maximum distance between said first drive control (41) and said second drive control (42) is comprised between 3 cm and 30 cm, optionally between 3 and 15 cm, optionally between 4 cm and 8 cm.

In a 10th aspect according to any one of the preceding aspects from 6, a maximum distance between said second drive control (41) and said main gripping portion (31) is comprised between 1 cm and 50 cm, optionally between 2 cm and 10 cm, optionally between 2 cm and 5 cm.

In an 11th aspect according to any one of the preceding aspects from 6, in which, at least in the horizontal operating condition, said first drive control (41) is interposed between said main gripping portion (31) of the control knob (30) and the ground (G) according to a vertical axis (VA) orthogonal to the ground (G) and passing through said first drive control (41).

In a 12th aspect according to any one of the preceding aspects, said device (1) extends in width along a respective transverse axis (TA) between a respective left side (LS) and a right side (RS).

In a 13th aspect according to the preceding aspect, said transverse axis (TA) is, optionally at least one operating condition of the device, parallel to the ground (G).

In an aspect 13-bis according to any one of the preceding aspects 12 and 13, said transverse axis (TA) is orthogonal to said reference plane (RP).

In a 14th aspect according to any one of the preceding aspects, said main gripping portion (31) of the control knob (30) extends in length between a respective first end portion (31a) and a respective second end portion (31b) along a main extension axis (MT).

In a 15th aspect according to any one of the preceding aspects, the main gripping portion (31) of the control knob (30) has a shape extending mainly along a dimension dominant in length between a respective first end portion (31a) and a respective second end portion (31b), said dimension dominant in length being oriented along a main extension axis (MT).

In a 16th aspect according to any one of the preceding aspects 14 and 15, said main extension axis (MT) is parallel to said transverse axis (TA) ± 10°, optionally ± 5°.

In a 17th aspect according to any one of the preceding aspects from 14, said main extension axis (MT) is parallel to the ground (G).

In an 18th aspect according to any one of the preceding aspects from 14, said main extension axis (MT) is parallel to the ground (G) at least in an operating condition of the device, optionally in the horizontal operating condition.

In a 19th aspect according to any one of the preceding aspects from 14, said main extension axis (MT) is parallel to the ground (G) both in the horizontal operating condition and in a right and/or left transverse operating condition of the work head (10).

In a 20th aspect according to any one of the preceding aspects from 14, said reference plane (RP) defines with said main extension axis (MT) of the main gripping portion (31) of the control knob (30) a reference angle (α) comprised between 70° and 110°, optionally between 80° and 100°, optionally equal to 90°.

In a 21st aspect according to any one of the preceding aspects, said reference angle (α) is identified on a virtual plane (VP) orthogonal to the reference plane (RP), orthogonal to the ground (G) and comprising said main extension axis (MT) of the main gripping portion (31) of the control knob (30).

In a 22nd aspect according to any one of the preceding aspects, said control knob (30) extends in length, optionally along said main extension axis (MT), between a respective first end (30a) facing said left side (LS) of the device and a respective second end (30b) facing said right side (RS) of the device (1).

In a 23rd aspect according to any one of the preceding aspects, the device (1) comprises an attachment system (60), interposed between the work head (10) and the first end portion (2a) of the stem (2), configured to arrange said work head (10) with respect to said stem (2) in:
- a left transverse operating position in which said work head faces towards said left side (LS) of the device, or in
- a right transverse operating position in which said work head faces towards said right side (RS) of the device.

In an aspect 23bis according to the preceding aspect, the attachment system (60) comprises one of:
- a connector constraining the work head (10) to the stem (2) in a fixed manner selectively in one among the left transverse operating position and the right transverse operating position and optionally in the horizontal operating position, and
- a joint configured to allow the angular orientation of said work head (10) with respect to said stem (2), said joint being configurable in:
   ∘ a free condition, in which the work head (10) is rotatable with respect to said stem (2) about a respective adjustment axis, and
   ∘ a locking condition, in which the work head (10) is fixed with respect to said stem (2).

In an aspect 23-ter according to any one of the preceding aspects, said device comprises a joint (60), interposed in connection between the work head (10) and the first end portion (2a) of the stem (2), configured to allow said work head (10) to be angularly oriented with respect to said stem (2) in at least one among:
- a left transverse operating position in which said work head faces towards said left side (LS) of the device, and
- a right transverse operating position in which said work head faces towards said right side (RS) of the device.

In an aspect 23-quater according to the preceding aspect, said joint is configured to allow to angularly orient said work head (10) with respect to said stem (2) both in the left transverse operating position and in the right transverse operating position.

In a 24th aspect according to the preceding aspect, the rotation axis (RA) of the work tool (11) is, when the work head (10) is in a left transverse operating position, parallel to the ground G.

In a 25th aspect according to any one of aspects 23 and 24, the rotation axis (RA) of the work tool (11) is, when the work head (10) is in a right transverse operating position, parallel to the ground G.

In a 26th aspect according to any one of the aspects from 23, the left transverse operating position defines a left transverse operating condition of the device.

In a 27th aspect according to any one of the aspects from 23, the right transverse operating position defines a right transverse operating condition of the device.

In an aspect 27-bis according to any one of the aspects from 23, when the work head (10) is in the left and/or right transverse operating position, the rotation axis (RA) of the work tool (11) of the work head (10) is parallel to the transverse axis (TA) of the device (1).

In a 28th aspect according to any one of the aspects from 23, in a first alternative, the attachment system (60) is configured for:
- allowing said work head (10) to be oriented in the right transverse operating position to define a right transverse operating condition, and
- preventing said work head (10) from being oriented in the left transverse operating position.

In an aspect 28-bis according to any one of the aspects, in a first alternative, the joint (60) is configured for:
- allowing said work head (10) to be oriented in the right transverse operating position to define a right transverse operating condition, and
- preventing said work head (10) from being oriented in the left transverse operating position.

In a 29th aspect according to any one of the aspects from 23, in a second alternative, the attachment system (60) is configured for:
- allowing said work head (10) to be oriented in the left transverse operating position to define a left transverse operating condition, and
- preventing said work head (10) from being oriented in the right transverse operating position.

In an aspect 29-bis according to any one of the aspects, in a second alternative, the joint (60) is configured for:
- allowing said work head (10) to be oriented in the left transverse operating position to define a left transverse operating condition, and
- preventing said work head (10) from being oriented in the right transverse operating position.

In a 30th aspect according to any one of the aspects from 28, in the first alternative, said second drive control (42) is interposed between said first drive control (41) and said second end (30b) of the control knob (30) according to said transverse axis (TA).

In a 31st aspect according to any one of the aspects from 29, in the second alternative, said second drive control (42) is interposed between said first drive control (41) and said first end (30a) of the control knob (30) according to said transverse axis (AT).

In a 32nd aspect according to any one of the aspects from 23, in the horizontal operating condition of the device (1), the work head (10) is in an angular position, with respect to the stem (2) interposed between said left transverse operating position and said right transverse operating position.

In a 32nd aspect according to any one of the aspects from 23, when the work head (10) is in the left and/or right transverse operating position, said rotation axis (RA) of the work tool (11) of the work head (10) is transverse or orthogonal to the reference plane (RP).

In a 33rd aspect according to any one of the aspects from 23, when the work head (10) is in the left and/or right transverse operating position, said rotation axis (RA) of the work tool (11) of the work head (10) is parallel to the ground (G).

In an aspect 33-bis according to any one of the preceding aspects from 23, said joint is configured to allow the rotation of the work head (10) between the left transverse operating position and the right operating position for an angular stroke comprised between 120° and 180°.

In an aspect 33-ter according to any one of the preceding aspects from 23, said joint is configured to allow the rotation of the work head (10) between the horizontal operating position and the left operating position for an angular stroke comprised between 70° and 90°.

In an aspect 33-quater according to any one of the preceding aspects from 23, said joint is configured to allow the rotation of the work head (10) between the horizontal operating position and the right operating position for an angular stroke comprised between 70° and 90°.

In an aspect 33-quinques according to any one of the preceding aspects from 23, when the work head (10) is in the left and/or right transverse operating position, said reference plane (RP) intersects said main gripping portion (31) of the control knob (30).

In an aspect 33-sexies according to the preceding aspect, when the work head (10) is in the left and/or right transverse operating position, said reference plane (RP) is transverse or orthogonal to the rotation axis (RA) of the work tool (11). In a 34th aspect according to any one of the preceding aspects, said stem (2) comprises an auxiliary gripping portion (4), distinct from said main gripping portion (31) of the control knob (30), configured to be gripped by the operator, and in which said main gripping portion (31) of the handle (20) is configured to be grasped by a first hand of the operator and the auxiliary gripping portion (4) of the stem (2) is configured to be grasped by a second hand of the operator.

In a 35th aspect according to the preceding aspect, said constraining portion (3) of the handle (20) is interposed, according to the length extension of the stem, between the work head (10) and the auxiliary gripping portion (4) of the stem (2).

In a 36th aspect according to any one of the aspects from 34, said auxiliary gripping portion (4) of the stem (2) is interposed between said constraining portion (3) of the handle (20) and said second end portion (2b) of the stem (2). In a 37th aspect according to any one of the aspects from 34, said auxiliary gripping portion (4) is defined by a section of the stem (2).

In a 38th aspect according to any one of the aspects from 34, said auxiliary gripping portion (4) of the stem (2) does not comprise said drive controls (40) necessary for determining, when kept simultaneously driven, the activation of the work head (10).

In a 39th aspect according to any one of the aspects from 34, said auxiliary gripping portion (4) of the stem (2) extends in length along a direction which is substantially rectilinear and/or parallel to the longitudinal axis (LA) of said stem (2). In a 40th aspect according to any one of the aspects from 34, said auxiliary gripping portion (4) of the stem (2) extends for a length which is at least double, optionally at least triple, the extension in length of the main gripping portion (31) of the control knob (30).

In a 41st aspect according to any one of the aspects from 34, said auxiliary gripping portion (4) of the stem (2) extends for a length comprised between 20 cm and 60 cm, optionally comprised between 25 cm and 50 cm, optionally between 30 cm and 40 cm.

In an aspect 41 bis according to any one of the preceding aspects from 34, said auxiliary gripping portion (4) of the stem (2) has a cylindrical shape with a circular section.

In a 42nd aspect according to any one of the aspects from 34, said peripheral profile (21) of the handle defines a "C" - shaped open profile extending between a first end portion (20a), constrained to the stem (2) at the constraining portion (3), and a second free end portion (20b).

In a 43rd aspect according to the preceding aspect, said main gripping portion (31) of the control knob (30) is substantially at said second end portion (20b) of the handle (20) or at a maximum distance from said second end portion (20b) of less than 15 cm, optionally comprised between 1 cm and 15 cm, optionally between 1 cm and 5 cm. In a 44th aspect according to any one of the aspects from 42, said first drive control (41) is interposed between said second drive control (42) and said second free end portion (20b) of the peripheral profile (21) of the handle, optionally according to the transverse axis (TA).

In a 45th aspect according to any one of the aspects from 42, in the first alternative, said second free end portion (20b) of the peripheral profile (21) of the handle faces the left side (LS) of the device.

In a 46th aspect according to any one of the aspects from 42, in the first alternative, said peripheral profile (21) emerges transversely with respect to the longitudinal axis (LA) of the stem mainly, optionally only, towards the right side (RS) of the device.

In a 47th aspect according to any one of the aspects from 42, in the second alternative said second free end portion (20b) of the peripheral profile (21) of the handle faces the right side (RS) of the device.

In a 48th aspect according to any one of the aspects from 42, in the second alternative, said peripheral profile (21) emerges transversely with respect to the longitudinal axis (LA) of the stem mainly, optionally only, towards the left side (LS) of the device.

In a 49th aspect according to any one of the aspects from 42, said open profile is curved and has a concavity (C) facing the left side or right side of the device.

In a 50th aspect according to the preceding aspect, said concavity faces a lateral direction of the device oriented along said transverse axis (TA) of the device.

In a 51st aspect according to any one of the aspects from 49, in the first alternative, said concavity (C) faces the left side (LS) of the device.

In an aspect 51-bis according to any one of the aspects from 49, if said concavity (C) faces a left side (LS) of the device, the joint (60) is configured for:
- allowing said work head (10) to be oriented towards said right side (RS) of the device, and
- preventing orienting said work head (10) towards said left side (LS) of the device.

In a 52nd aspect according to any one of the aspects from 49, in the second alternative, said concavity (C) faces the right side (RS) of the device.

In an aspect 52-bis according to any one of the aspects from 49, if said concavity (C) faces a right side (RS) of the device, the joint (60) is configured for:
- allowing said work head (10) to be oriented towards said left side (LS) of the device, and
- preventing orienting said work head (10) towards said right side (RS) of the device.

In a 53rd aspect according to any one of the preceding aspects, said peripheral profile (21) of the handle defines a closed profile constrained to said stem (2) at the constraining portion (3).

In a 54th aspect according to the preceding aspect, said main gripping portion (31) of the control knob (30) is positioned at a medial zone of said closed profile opposite said constraining portion (3).

In a 55th aspect according to the preceding aspect, said medial zone being substantially equally spaced from the stem (2) both along a left section of the peripheral profile (21) of the handle connecting said main gripping portion (31) to the stem (2) and along a right section of the peripheral profile (21) of the handle (20), distinct and opposite the left section, connecting said main gripping portion (31) to the stem (2).

In a 56th aspect according to any one of the preceding aspects from 6, said first and second drive controls (41, 42) are sufficient to determine, when driven simultaneously, the work head (10) to execute the maintenance operations.

In a 57th aspect according to any one of the preceding aspects, said device comprises a battery housing (50) configured to house a battery for powering the work head, optionally for powering the motor (12) of the work head (10). In a 58th aspect according to the preceding aspect, said battery housing (50) is positioned at said second end portion (2b) of the stem (2).

In a 59th aspect according to any one of the preceding aspects from 57, said auxiliary gripping portion (4) of the stem is interposed between said constraining portion (3) of the handle (20) and said battery housing (50).

In a 60th aspect according to any one of the preceding aspects, said reference plane (RP) intersects the work head (10).

In a 61st aspect according to any one of the preceding aspects from 23, said reference plane (RP) intersects the work head (10) both in the horizontal operating position and in the left and/or right transverse operating position.

In a 62nd aspect according to any one of the preceding aspects, said peripheral profile (21) of the handle (20) extends from said stem (2) to define at least one lateral section of the handle and a top section of the handle transverse to said at least one lateral section, said top section comprising said main gripping portion (31) of the control knob (30).

In a 63rd aspect according to any one of the preceding aspects, said work tool (11) is a cutting tool configured to execute cutting operations.

In a 64th aspect according to the preceding aspect, in which said cutting tool comprises at least one blade, for example a metal blade, rotatably movable about said rotation axis (RA) or one or more wires emerging radially with respect to the rotation axis (RA) of the cutting tool and rotatably movable about said rotation axis (RA), optionally said wires of the cutting tool being made of synthetic polyamides, in particular aliphatic polyamides.

In a 65th aspect according to any one of the preceding aspects, said device comprises a motor (12) configured to drive said work head (10).

In a 66th aspect according to the preceding aspect, said work head (10) carries said motor (12).

In a 67th aspect according to any one of the preceding aspects from 65, a rotation axis (RA) of the cutting tool (11) of the work head (10) is parallel or coincident with a motor axis of the motor (12).

In a 68th aspect according to any one of the preceding aspects from 65, said motor (12) is an electric motor.

In a 69th aspect according to any one of the preceding aspects, said work head (10) carries at least one wheel (13) rotatably movable about a respective rotation axis, said wheel (13) emerging laterally from said work head.

In a 70th aspect according to the preceding aspect, said rotation axis of the wheel (13) is parallel to the rotation axis (RA) of the work tool (11) of the work head (10).

In a 71st aspect according to any one of the preceding aspects from 69, said wheel (13) is configured to contact the ground G when the work head is in the left transverse operating position and/or the right transverse operating position. In a 72nd aspect according to any one of the preceding aspects, the peripheral profile (21) of the handle (20) defines a medial lying plane of the handle itself transverse to the longitudinal axis (LA) of the stem (2).

In a 73rd aspect according to the preceding aspect, said medial lying plane intersects said control knob (30) and said constraining portion (3) of the handle (20).

In an aspect 73-bis according to any one of the preceding aspects 72 and 73, the medial lying plane of the handle is orthogonal to the reference plane (RP).

In a 74th aspect according to any one of the preceding aspects from 53, the closed profile of the peripheral profile (21) defines an internal opening (14) of the handle (20).

In a 75th aspect according to the preceding aspect, the medial lying plane of the handle is parallel and coincident with said internal opening 14.

In a 76th aspect according to any one of the preceding aspects 74, the stem 2 passes through said internal opening 14 of the handle.

In a 77th aspect according to any one of the preceding aspects, the drive controls (40) carried by the control knob (30) and necessary for determining the activation of the work head (10) are monostable commands movable between an activation position, in which the activation of the work head (10) is allowed, and a rest position in which the activation of the work head (10) is precluded.

In a 78th aspect according to the preceding aspect:
- the rest position is stable, in which said drive controls are configured to maintain said rest position when not driven by the operator, and
- the activation position is non-stable, in which said drive controls are configured to autonomously move from the activation position to the rest position if not kept driven by the operator.

In a 79th aspect according to any one of the preceding aspects from 6, at least in the horizontal operating condition and optionally also in the left and/or right transverse operating position, said first drive control (41) is interposed between said main gripping portion (31) of the control knob (30) and the ground (G) according to a vertical axis (VA) orthogonal to the ground (G) and passing through said first drive control (41).

In an 80h aspect according to any one of the preceding aspects, said concavity (C) of the handle is oriented along a direction parallel to said rotation axis (RA) of the cutting tool (11) when the work head (10) is positioned in at least one among the right transverse operating position and the left transverse operating position.

In an 81st aspect according to any one of the preceding aspects, in the left transverse operating position, the cutting tool (11) of the work head faces said left side (LS) of the device.

In an 82nd aspect according to any one of the preceding aspects, in the right transverse operating position, the cutting tool (11) of the work head faces said right side (RS) of the device.

In an 83rd aspect according to any one of the preceding aspects, in the first alternative, said peripheral profile (21) of the handle emerges transversely with respect to the longitudinal axis (LA), along the transverse axis (TA) of the device (1), mainly, and optionally only, towards the right side (RS) of the device (1).

In an 84th aspect according to any one of the preceding aspects, in the second alternative, said peripheral profile (21) of the handle emerges transversely with respect to the longitudinal axis (LA), along the transverse axis (TA) of the device (1), mainly, and optionally only, towards the left side (SS) of the device (1).

In an 85th aspect according to any one of the preceding aspects, in the first alternative, said peripheral profile (21) of the handle emerges transversely with respect to the longitudinal axis of the stem towards the right side (RS) of the device up to a distance with respect to said stem comprised between 10 cm and 50 cm, optionally between 15 cm and 35 cm, said distance being measured parallel to said transverse axis (AT) of the device (1).

In an 86th aspect according to the preceding aspect, in the first alternative, said peripheral profile (21) of the handle:
- does not emerge transversely with respect to the longitudinal axis of the stem towards the left side (LS) of the device; or
- emerges transversely with respect to the longitudinal axis of the stem towards the left side (LS) of the device up to a distance with respect to said stem of less than 10 cm, optionally between 1 cm and 10 cm, optionally between 2 cm and 5 cm, said distance being measured parallel to said transverse axis (AT) of the device (1).

In an 87th aspect according to any one of the preceding aspects, in the second alternative, said peripheral profile (21) of the handle emerges transversely with respect to the longitudinal axis (LA) of the stem (2) towards the left side (LS) of the device (1) up to a distance with respect to said stem comprised between 10 cm and 50 cm, optionally between 15 cm and 35 cm, said distance being measured parallel to said transverse axis (AT) of the device (1).

In an 88th aspect according to the preceding aspect, in the second alternative, said peripheral profile (21) of the handle:
- does not emerge transversely to the longitudinal axis of the stem towards the right side (RS) of the device; or
- emerges transversely with respect to the longitudinal axis of the stem towards the right side (RS) of the device up to a distance from said stem of less than 10 cm, optionally comprised between 1 cm and 10 cm, optionally between 2 cm and 5 cm,
said distance being measured parallel to said transverse axis (AT) of the device (1).

In an 89th aspect according to any one of the preceding aspects, said open peripheral profile (21) of the handle is curved.

In a 90th aspect according to any one of the preceding aspects, said peripheral profile (21) of the handle is open and "C"-shaped.

In a 91st aspect according to any one of the preceding aspects, said main gripping portion (31) of the control knob (30) is substantially at said second end portion (20b) of the handle (20) or at a maximum distance from said second end portion (20b) of the handle (20) of less than 15 cm, optionally comprised between 1 cm and 15 cm, optionally between 1 cm and 5 cm.

In a 92nd aspect according to any one of the preceding aspects, in the first alternative, said second free end portion (20b) of the peripheral profile (21) of the handle (20) faces the left side (LS) of the device.

In a 93rd aspect according to any one of the preceding aspects, in the second alternative, said second free end portion (20b) of the peripheral profile (21) of the handle (20) faces the right side (RS) of the device.

In a 94th aspect according to any one of the preceding aspects, said drive controls (40) comprise at least a first drive control (41) and a second drive control (42).

In a 95th aspect according to the preceding aspect, the device is configured for:
- activating the work head (10) if the first drive control (41) and the second drive control (42) are both driven by the operator;
- preventing the activation of the work head (10) if at least one among the first drive control (41) and the second drive control (42) is not activated by the operator.

In a 96th aspect according to any one of the two preceding aspects, said control knob (30) is configured to allow the operator to grasp said main gripping portion (31) of the control knob (30) with one hand and, simultaneously and with the same hand, to reach and drive said first and second drive control (42) to determine the activation of the work head (10).

In an 97th aspect according to any one of the preceding aspects from 94, said first drive control (41) is positioned on said main gripping portion (31) of the control knob (30), and said second drive control (42) is positioned to the side of said main gripping portion (31) of the control knob (30).

In a 98th aspect according to any one of the preceding aspects from 94, said control knob (30) extends in length between a first end (30a) facing said left side (LS) of the device and a second end (30b) facing said right side (RS) of the device, and in which:
- in the first alternative, said second drive control (42) is interposed between said first drive control (41) and said second end (30b) of the control knob (30) according to the transverse axis (TA) of the device (1);
   and/or
- in the second alternative, said second drive control (42) is interposed between said first drive control (41) and said first end (30a) of the control knob (30) according to the transverse axis (TA) of the device (1).

In a 99th aspect according to any one of the preceding aspects, a reference plane (RP) is defined orthogonal to the ground (G) and comprising said longitudinal extension axis (LA) of the stem (2), in which, in a horizontal operating condition of the device (1):
- said reference plane (RP) is parallel to said rotation axis (RA) of the work tool (11), optionally in which said reference plane (RP) comprises said rotation axis (RA) of the work tool (11),
- said reference plane (RP) intersects said main gripping portion (31) of the control knob (30).

In a 100th aspect according to the preceding aspect, in said horizontal operating condition of the device, said rotation axis (RA) of the work tool (11) is orthogonal to the ground.

In a 101st aspect according to any one of the two preceding aspects, the work head (10) is, when in said horizontal operating position, angularly interposed between the left transverse operating position and the right transverse operating position.

In a 102nd aspect according to any one of the preceding aspects, in the first alternative, said joint is configured to allow a movement of the work head (10) between the horizontal operating position and the right transverse operating position and vice versa.

In a 103rd aspect according to any one of the preceding aspects, in the second alternative, said joint is configured to allow a movement of the work head (10) between the horizontal operating position and the left transverse operating position and vice versa.

In a 104th aspect according to any one of the preceding aspects, said joint, in particular in accordance with the first and/or the second alternative, is configured to allow an angular stroke of the work head (10) with respect to the stem (2) comprised between 70° and 90°, optionally equal to 90°.

In a 105th aspect according to any one of the preceding aspects, the first alternative of the device (1) is alternative to the second alternative of the device (1).

In a 106th aspect according to any one of the preceding aspects, the device is configurable in only one among the first alternative and the second alternative.

### BRIEF DESCRIPTION OF THE DRAWINGS

Some embodiments and aspects of the invention will be described hereinafter with reference to the accompanying drawing tables, given merely for indicative/exemplary/explanatory non-limiting purposes, in which:
- Figure 1 is a perspective view of a device in accordance with the present invention;
- Figure 2 is a side view of a device in accordance with the present invention;
- Figure 3 is a front view of a device in accordance with the present invention;
- Figure 4 is a front view from above of a device in accordance with the present invention;
- Figure 5 is a rear view of a device in accordance with the present invention;
- Figure 6 is a front view of a device in accordance with the present invention in which the cutting plate faces the ground G;
- Figure 7 and Figure 8 are front views of a device in accordance with the present invention in which the cutting plate is oriented laterally, respectively in the right transverse operating position and in the left transverse operating position;
- Figure 9 is a front view of a device in accordance with a further embodiment of the present invention in which the cutting plate faces the ground G;
- Figure 10 and figure 11 are front views of a device in accordance with the embodiment of figure 9 in which the cutting plate is oriented laterally, respectively in the right transverse operating position and in the left transverse operating position;
- Figure 12 is a perspective detailed view of a control knob of a device in accordance with the present invention.

It should be noted that in the present detailed description, corresponding parts illustrated in the various figures are indicated with the same numerical references. The figures could illustrate the object of the invention through non--scale depictions so that the parts and components illustrated in the figures related to the object of the invention could exclusively relate to schematic depictions.

### DETAILED DESCRIPTION

### Device 1

A land maintenance device, for example a cutting device for mowing the turfgrass of a ground G is indicated overall by the reference number 1. Such a device 1 can also be suitable for carrying out the function of brush cutter or turf trimmer. The present device is a portable device, in particular in which an operator, during maintenance operations of the ground G, carries the device by hand or with the aid of a shoulder strap. Therefore, during a working condition, the device 1 is at least partially or entirely supported in weight by the operator, without said device resting on the ground G. The weight of the device of the present invention must therefore be congruent with a weight which can be carried by the operator as easily as possible. In this regard, the device 1 of the present invention has a total weight comprised between 1 kg and 15 kg, preferably between 2 kg and 8 kg.

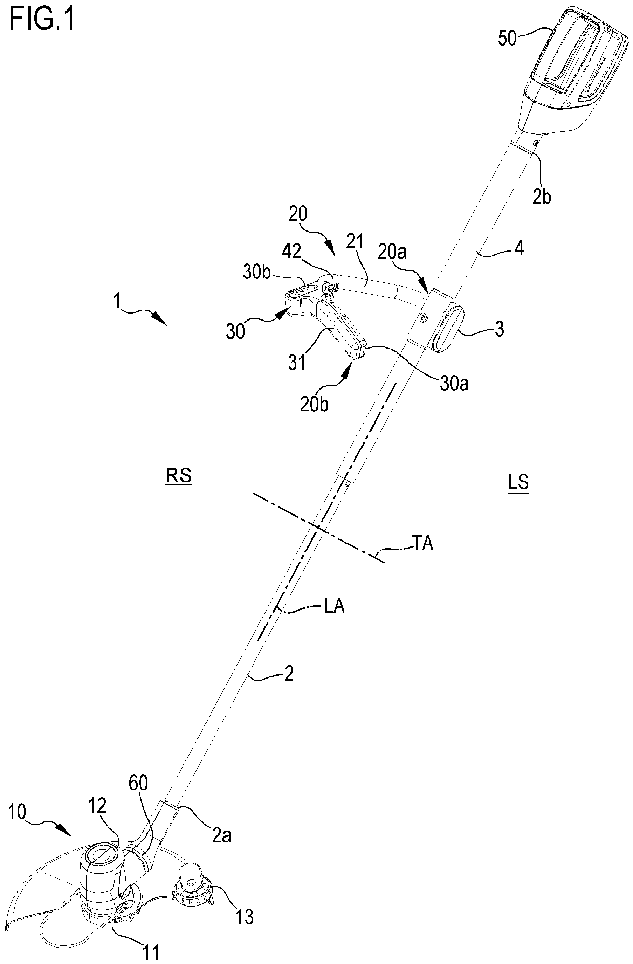

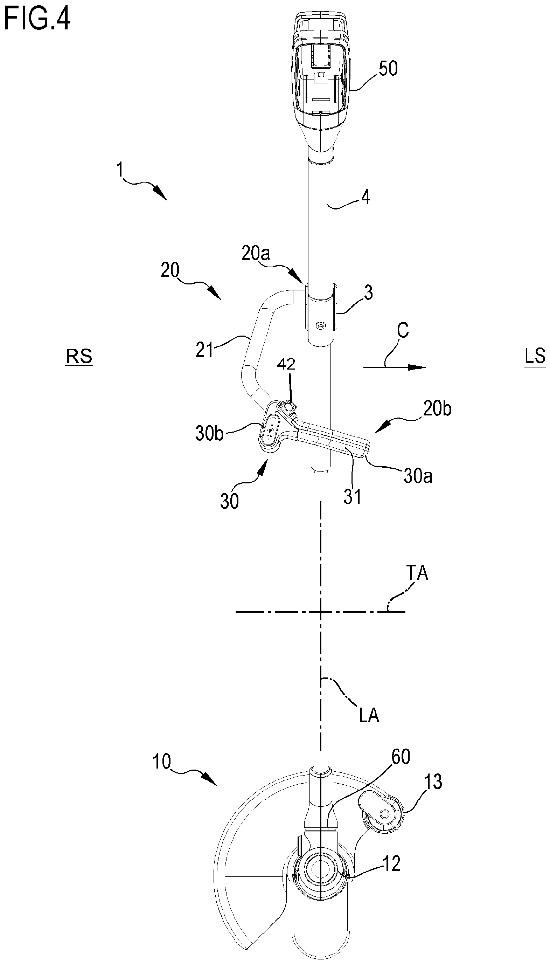

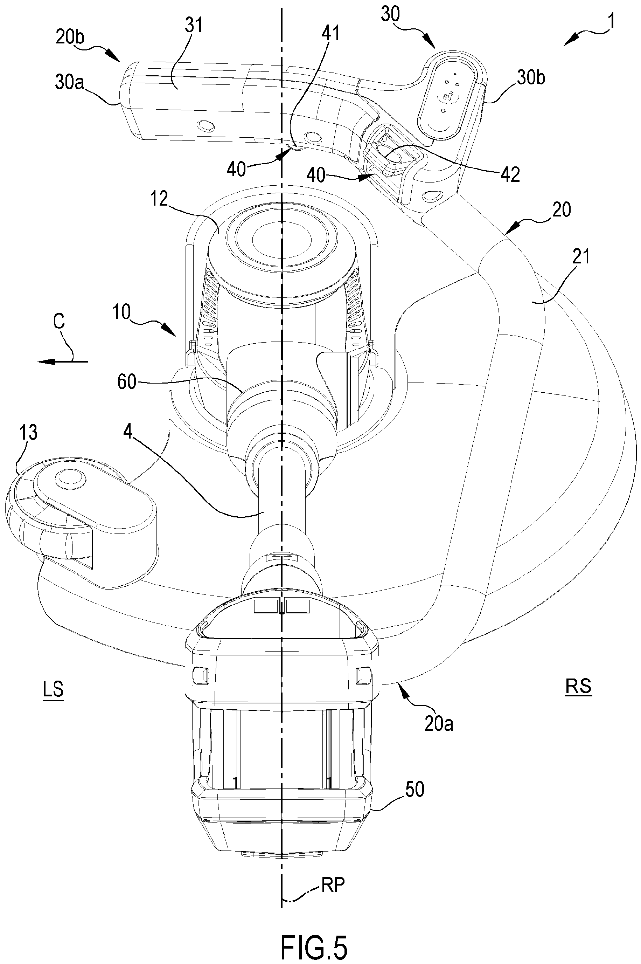

The device 1 comprises a stem 2 extending in length, along a respective longitudinal extension axis LA between a first end portion 2a and a second end portion 2b. Similarly, the device 1 extends in width along a respective transverse axis TA, orthogonal to the longitudinal extension axis LA between a respective left side LS and a right side RS, as shown in figures 1-11.

The stem 2 can comprise a rod extending substantially straight between the first end portion 2a and the second end portion 2b.

During a condition of use of the device 1, the first end portion 2a can define the bottom portion of the device 1, i.e., the end portion of the stem 2 closest to the ground G with respect to the second end portion 2b.

The stem 2 can have a cylindrical shape with a circular section. In particular, the stem can have an outer diameter comprised between 10 mm and 60 mm, in particular between 20 mm and 50 mm.

Alternatively, the stem 2 can have an elliptical or polygonal sectional shape, for example a square or rectangular section. The stem 2 can be made of metallic material, for example aluminium or steel, or it can be made of plastic or composite material.

The stem 2 can extend longitudinally along the longitudinal extension axis LA between the first end portion 2a and the second end portion 2b for a length comprised between 100 cm and 200 cm, preferably between 100 cm and 150 cm. The device 1 comprises a work head 10 configured to execute the maintenance operations on the ground G. The work head 10 is preferably constrained to the stem 2 at the first end portion 2a.

The work head 10 is configured to execute vegetation cutting operations, e.g., turfgrass cutting operations or plant pruning operations, e.g., trimming a hedge.

The work head 10 comprises at least one work tool 11, e.g., a turf-trimming or grass-cutting head, comprising at least one blade or at least one cutting wire, e.g., a nylon wire, to execute the turfgrass cutting operations or the pruning operations. In fact, the work tool 11 can be a cutting tool.

The work tool 11 is rotatably movable about a respective rotation axis RA. The rotation speed of the shaft during an operating condition of the device can be comprised between 3000 rpm and 9000 rpm.

The device further comprises a motor 12, comprising a respective motor shaft, configured to drive the work head 10 to execute the maintenance operations. The motor is operatively connected to the work tool 11 so as to rotate the work tool 11 about the rotation axis RA thereof.

The motor can be an electric motor carried directly by the work head 10, in which the motor axis is coincident with or parallel to the rotation axis RA of the work tool 11.

The motor can have a nominal power comprised between 500 Watts and 3500 Watts.

The work head 10 can further comprise a safety cover arranged to cover the cutting tool so as to protect the operator during a use condition of the device. The safety cover is adapted to stop any debris thrown by the cutting tool, so as to prevent such debris from hitting the operator. The safety cover can be carried directly by the work head and be interposed between the motor 12 and the cutting tool 11. The safety cover extends transversely away from the rotation axis RA of the cutting tool.

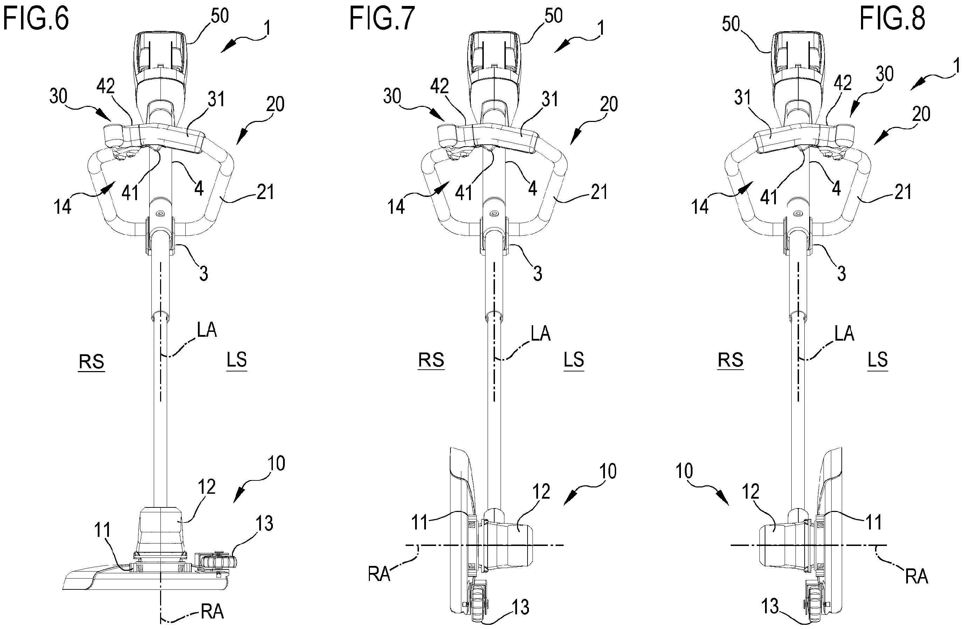

The work head 10 can further comprise a wheel 13, rotatably movable about a respective rotation axis, emerging laterally from the work head. The rotation axis of the wheel 13 can be parallel to the rotation axis RA of the work tool 11 of the work head 10. The wheel 13 is configured to contact the ground G when the work head is in a position transverse to the ground G, as shown in figures 7, 8, 10 and 11: in such a transverse position, the wheel 13 can rest on the ground G so as to act as a support for the device 1 during the maintenance operations of the ground G. The weight of the device is then at least partially unloaded onto the wheel 13. The rotation of the wheel around the rotation axis thereof allows the operator to move the device back and forth.

The wheel 13 can be carried by the safety cover of the work head 10: in particular, the wheel 13 can be mounted at a peripheral portion of the safety cover.

Alternatively to the wheel 13, the device can comprise a skid adapted to slide on the ground G and support, at least partially, the weight of the device 1.

The device can comprise a battery housing 50 adapted to accommodate an electric battery, operatively connected to the electric motor 12 and configured to power the motor 12 to drive the work head 10. The battery housing 50 can be positioned at or near the second end portion 2b of the stem 2. Optionally, the battery housing 50 can define an end portion of the device 1, along the longitudinal axis LA, opposite the work head 10. The battery can have a nominal voltage comprised between 10 Volts and 100 Volts, and a capacity comprised between 2Ah and 20 Ah.

The device can comprise an attachment system 60, interposed between the work head 10 and the first end portion 2a of the stem 2, configured to arrange the work head 10 with respect to the stem 2 in a left transverse operating position or in a right transverse operating position. In the left transverse operating position, the work head faces the left side LS of the device, while in the right transverse operating position, the work head faces the right side RS of the device.

In an embodiment, the attachment system 60 can comprise a connector constraining the work head 10 to the stem 2 in a fixed manner selectively in one among the left transverse operating position and the right transverse operating position and optionally in the horizontal operating position. If the connector allows the work head 10 to be arranged in the left transverse operating position, the connector simultaneously precludes the work head 10 from being arranged in the right transverse operating position. Similarly, if the connector allows the work head 10 to be arranged in the right transverse operating position, the connector simultaneously precludes the work head 10 from being arranged in the left transverse operating position.

Alternatively, the attachment system 60 can comprise a joint 60, interposed in connection between the work head 10 and the first end portion 2a of the stem 2, configured to allow the work head 10 to be angularly oriented with respect to the stem 2. The joint 60 therefore defines an attachment portion between the work head 10 and the stem 2 and is configured to allow a rotation of the work head with respect to the stem 2 about an adjustment axis of the joint.

The joint can be configured to allow the work head 10 to be angularly moved between the left angular position and the right angular position: in other words, the joint can allow the work head 10 to be oriented both in the left angular position and in the right angular position. In such a case, the joint can be configured to allow the work head 10 to be moved angularly around the adjustment axis along an angular stroke extending up to 180°.

The joint can alternatively be configured to allow the work head 10 to be angularly moved between a horizontal operating position, in which the work head faces the ground, and the left angular position or the right angular position. In such a case, the angular stroke of the joint can be limited to about 90°.

In an embodiment, the work head 10 can be movable by rotation around the adjustment in a continuous manner. In other words, the work head 10 is positionable in a substantially infinite number of intermediate positions around the adjustment axis. Alternatively, the work head 10 can be rotatably movable around the adjustment axis in a discrete manner. In other words, the work head 10 can be positionable in a plurality of discrete intermediate positions around the adjustment axis.

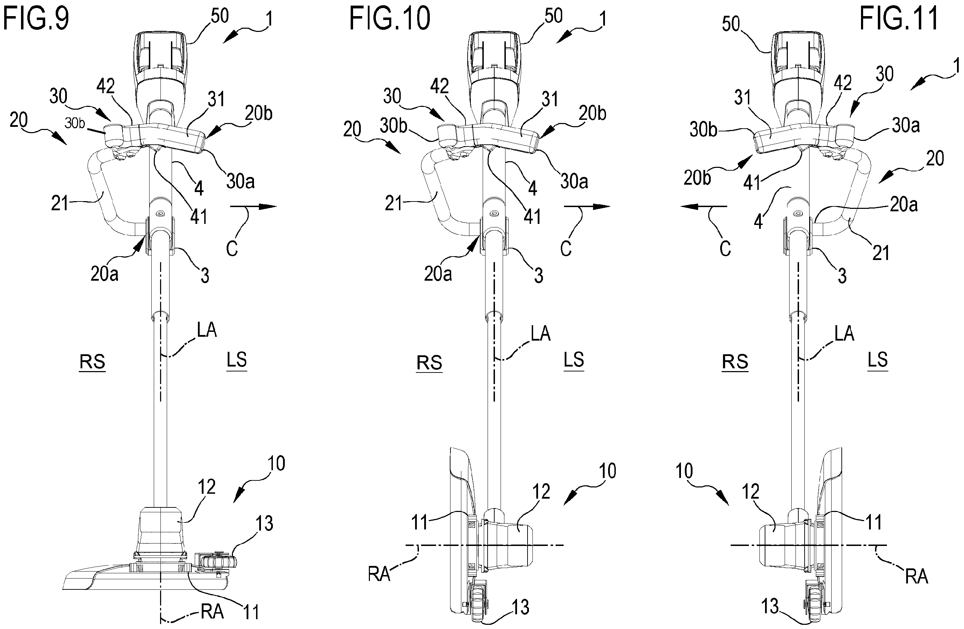

The joint 60 is configured to allow the angular orientation of the work head 10 with respect to the stem 2 in at least one among:
- a left transverse operating position in which the work head faces the left side LS of the device 1, as shown in figures 8 and 11, and
- a right transverse operating position in which the work head faces the right side RS of the device 1, as shown in figures 7 and 10.

In greater detail, in the left transverse operating position, the work tool 11 of the work head 10 faces the left side LS of the device 1, while in the right transverse operating position, the work tool 11 of the work head 10 faces the right side RS of the device 1. In particular, in the right transverse operating position, the rotation axis RA of the work tool 11 of the work head 10 is parallel to the transverse axis TA of the width extension of the device.

The left transverse operating position and the right transverse operating position of the work head identify a transverse operating condition of use of the device 1 in which the rotation axis of the work tool 11 is substantially parallel to the ground G, as shown in figures 7, 8, 10 and 11.

The joint 60 is further configured to allow the work head 10 to be angularly oriented with respect to the stem 2 in a horizontal operating position, shown in figures 1-6 and 9, which identifies a horizontal operating condition of use of the device in which the work head faces the ground G. In the horizontal operating condition, the rotation axis of the work tool 11 is therefore substantially orthogonal to the ground G. The work head 10, when in the horizontal operating position, is rotated by 90° ± 10° with respect to the left and/or right transverse operating position.

The work head 10, when in the horizontal operating position, is thus angularly interposed between the left transverse operating position and the right transverse operating position.

It should be noted that the joint can comprise a brake configured to stably maintain the horizontal operating position, the left transverse operating position and/or the right operating position.

The device further comprises a handle 20 configured to allow the gripping of the device 1 by an operator during maintenance operations. The handle can be mounted on the stem 2 by means of a constraining portion 3 interposed between the first end portion 2a and the second end portion 2b. The handle 20 is preferably arranged closer to the second end portion 2b than to the first end portion 2a of the stem 2. Alternatively, the handle can be in a zone which is substantially equidistant from the first end portion 2a and the second end portion 2b of the stem 2.

The handle 20 extends along a respective peripheral profile 21 away from the stem 2: the peripheral profile 21 defines a supporting structure of the handle, and can be made by means of a metal profile, for example steel or aluminium, or in plastic material. The peripheral profile 21 thus defines a shape of the handle itself away from the stem 2.

The handle 20 emerges transversely with respect to the length extension of the stem 2 towards a left side LS and/or towards a right side RS of the device. In particular, the peripheral profile 21 of the handle 20 defines a medial lying plane transverse to the longitudinal axis LA of the stem 2.

In accordance with the embodiment of figures 6-8, the peripheral profile 21 of the handle 20 defines a closed profile emerging transversely to the length extension of the stem both towards the left side LS and towards the right side RS of the device. In the case of a closed profile, the peripheral profile 21 can define a symmetrical shape, for example symmetrical with respect to the reference plane passing through the longitudinal axis LA of the stem 2. The closed profile of the peripheral profile 21 defines an internal opening 14 of the handle 20: the medial lying plane of the handle is parallel and coincident with said internal opening 14.

Furthermore, the stem 2 can extend inside the internal opening 14, such that the longitudinal axis LA of the stem 2 transversely intersects said internal opening 14.

In accordance with the embodiment of figures 1-5 and 9-12, the peripheral profile 21 of the handle defines an open profile emerging transversely to the length extension of the stem mainly towards the left side LS or mainly towards the right side RS of the device. For example, the peripheral profile 21, in figures 1-5, 9 and 10 emerges towards the right side of the device: on the contrary, in the embodiment of figure 11, the peripheral profile 21 can emerge towards the left side of the device. The open profile of the handle is a curved profile defining a respective concavity C facing the left side or facing the right side of the device. The curved profile can be "C" -shaped. For example, the concavity of the curved profile in accordance with figures 9 and 10 can face the left side of the device: on the contrary, the concavity of the curved profile in accordance with figure 11 can face the right side of the device 1. In particular, the concavity C is oriented along the transverse axis TA of the device. In other words, during an operating condition, the concavity C is oriented along a direction substantially parallel to the ground G.

The open profile of the handle 20extends between a first end portion 20a, constrained to the stem at a constraining portion 3, and a second free end portion 20b. If the concavity faces the left side, the second free end portion 20b faces the left side of the device 1. On the contrary, if the concavity faces the right side of the device, the second free end portion 20b faces the right side of the device 1.

The device further comprises a control knob 30 carried by the handle 20, extending in length between a first end 30a facing the left side LS of the device, and a second end 30b facing the right side RS of the device 1.

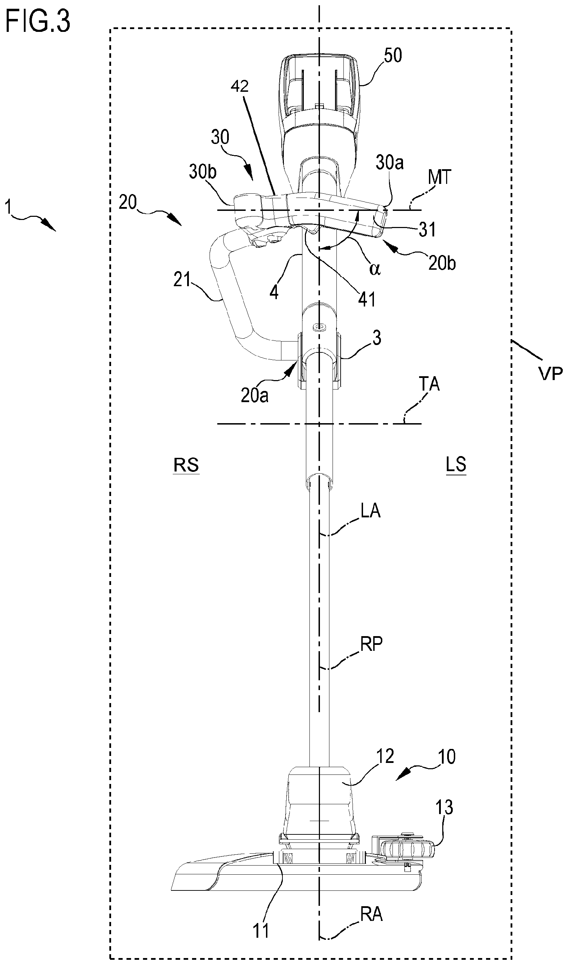

The control knob 30 comprises a main gripping portion 31 configured to be grasped by an operator so as to be able to manoeuvre the device during an operating condition thereof. The main gripping portion 31 of the control knob 30 has a shape extending mainly along a dimension dominant in length between a respective first end portion and a respective second end portion. Such a dimension dominant in length of the main gripping portion of the knob is oriented along a main extension axis MT, as shown in figure 3.

In particular, the main gripping portion 31 of the control knob 30 can extend in length along a main extension axis MT. The extension in length along the main extension axis MT defines a main geometric quantity of the control knob 30. Such a length extension of the gripping portion 31 of the control knob is therefore adapted to accommodate the hand of the operator, and must be sufficiently long to cover a distance between the index finger and the little finger of a hand of the operator. In greater detail, the main gripping portion 31 of the control knob 30 extends along the main extension axis MT for a length comprised between 8 cm and 20 cm, optionally between 10 cm and 15 cm.

The main gripping portion 31 of the control knob 30 also extends transversely, with respect to the main extension axis MT, in width along a respective transverse axis. The main gripping portion 31 of the control knob 30 has a width extension along said transverse axis comprised between 2 cm and 7 m, in particular between 3 cm and 6 cm. The main gripping portion 31 can have a circular or polygonal section orthogonal to the main extension axis MT, for example with a square or rectangular section having chamfers at the vertices.

If the handle 20 has the open profile disclosed above, the main gripping portion 31 of the control knob 30 is substantially at the second end portion 20b of the handle 20 or at a maximum distance from the second end portion 20b of less than 15 cm, optionally comprised between 1 cm and 15 cm, optionally between 1 cm and 5 cm.

Alternatively, in the embodiment in which the handle 20 has the previously disclosed closed profile, the main gripping portion 31 of the control knob 30 is positioned at a medial zone of the closed profile opposite the constraining portion 3. The medial zone can be defined as substantially equally spaced from the stem 2 both along a left section of the peripheral profile 21 of the handle connecting the main gripping portion 31 to the stem, and along a right section of the peripheral profile 21 of the handle, distinct and opposite the left section, connecting the main gripping portion 31 to the stem.

The present disclosure further refers to a reference plane RP orthogonal to the ground G and comprising said longitudinal extension axis LA of the stem 2. In other words, the reference plane RP is parallel to and coincident with the longitudinal extension axis LA.

In the horizontal operating condition of the device 1, the reference plane RP is parallel to the rotation axis RA of the work tool 11. Optionally, the reference plane RP comprises the rotation axis RA of the work tool 11.

In the horizontal operating condition of the device 1, the reference plane RP intersects the main gripping portion 31 of the control knob 30. In particular, in the horizontal operating condition of the device 1, the reference plane RP intersects the main gripping portion 31 of the control knob 30 in a substantially orthogonal manner.

The reference plane RP intersects the main extension axis MT of the main gripping portion 31 of the control knob 30, defining a reference angle α. The reference angle α is comprised between 70° and 110°, optionally between 80° and 100°. Optionally, the reference angle α is equal to 90°.

According to the front view of figure 3, the main extension axis MT is transverse with respect to the longitudinal axis LA of the stem according to said reference angle α.

The reference angle α is identified according to a visual axis parallel to the reference plane, i.e., according to the view of figure 3. In particular, the reference angle α is identified on a virtual plane VP, shown in figure 3, which is orthogonal to the reference plane RP, orthogonal to the ground G and comprising the main extension axis MT of the main gripping portion 31 of the control knob 30. The virtual plane VP is also parallel to the rotation axis RA of the work tool both in the horizontal operating condition and in the left and right transverse operating condition.

The reference plane RP also intersects the work head 10. In particular, when the work head 10 is in the horizontal operating position, the reference plane is parallel to, and optionally coincident with, the rotation axis of the cutting tool 11 of the work head 10. On the contrary, when the work head 10 is in the left and/or right transverse operating position, the reference plane RP is transverse, and optionally orthogonal, to the rotation axis of the cutting tool 11 of the work head 10.

It should be noted that the main extension axis MT is spaced from the longitudinal axis LA of the stem, such that the main extension axis MT does not intersect the longitudinal axis LA of the stem 2.

It should be noted that the main extension axis MT of the main gripping portion 31 of the control knob 30 is, in the horizontal operating condition of the work head, substantially parallel to the ground G.

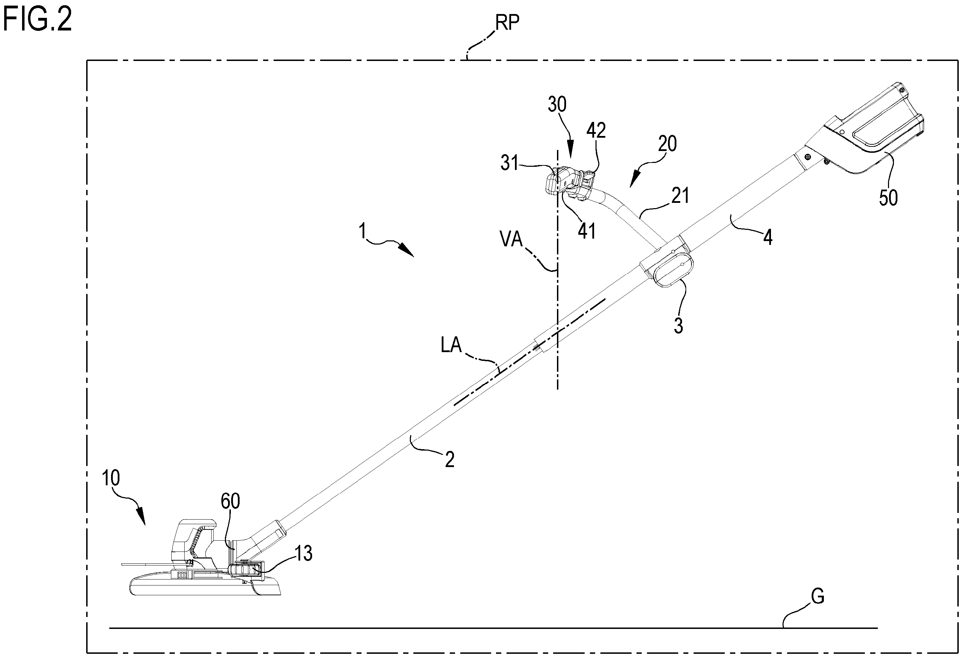

The above features define the position of the control knob at a top zone of the handle, such that the stem 2 is interposed in height, i.e., with respect to a vertical axis VA orthogonal to the ground G, between the main gripping portion 31 of the control knob 30 and the ground G itself. In particular, such a vertical axis VA intersects both the stem and the main gripping portion 31 of the control knob 30, and in which the main extension axis MT is orthogonal to such a vertical axis VA, as shown in figure 2.

The positioning of the main gripping portion 31 at such a top zone facilitates the manoeuvrability of the device by the operator.

The peripheral profile 21 of the handle 20 extends from the stem 2 to define at least a lateral section of the handle and a top section of the handle transverse to the lateral section. The top section comprises the main gripping portion 31 of the control knob 30. In an operating condition of the device 1, the stem is interposed in height, i.e., along an axis orthogonal to the ground G, between the main gripping portion 31 of the control knob 30 and the ground G. In particular in such an operating condition, such an axis orthogonal to the ground G intersects both the stem and the main gripping portion 31 of the control knob.

The device further comprises drive controls 40 configured to determine the activation of the work head 10 to execute the maintenance operations. The drive controls 40 can be positioned on the control knob 30.

In an embodiment shown in the attached figures, the control knob 30 carries all the drive controls necessary to determine, when kept simultaneously driven by a hand of the operator, the activation of the work head 10.

The drive controls (40) carried by the control knob (30) and necessary for determining the activation of the work head (10) are monostable commands movable between an activation position, in which the activation of the work head (10) is allowed, and a rest position in which the activation of the work head (10) is precluded. In particular, the rest position is stable, such that the drive controls 40 carried by the control knob 30 are configured to maintain the rest position when not driven by the operator. On the contrary, the activation position is non-stable, such that the drive controls 40 carried by the control knob 30 are configured to move autonomously from the activation position to the rest position if not kept driven by the operator. The drive controls can comprise an elastic element, for example a spring, configured to determine the automatic return from the activation position to the rest position.

It should be noted that the control knob 30 is configured to allow the operator to grasp the main gripping portion 31 of the control knob 30 with one hand and, simultaneously and with the same hand, reach and drive said first and second drive controls 40 to determine the activation of the work head 10.

In an embodiment, the drive controls 40 of the control knob 30 comprise at least a first drive control 41 and a second drive control 42, whereby the device is configured for:
- activating the work head 10 if the first drive control 41 and the second drive control 42 are both driven, optionally pressed, by the operator; and
preventing the activation of the work head 10 if at least one of the first drive control 41 and the second drive control 42 is not driven, optionally pressed, by the operator.

In other words, the work head 10 is activated only if the operator drives both the first and the second drive control. If only the first or only the second drive control is activated, the work head is not activated. The step of driving the drive control involves moving the drive control from the rest position to the drive position.

It should further be noted that the control knob 30 is configured to allow the operator to grasp the main gripping portion 31 of the control knob 30 with one hand and, simultaneously and with the same hand, reach and drive the first drive control 41 and the second drive control 42 to determine the activation of the work head 10. The first drive control 41 and the second drive control 42 are thus adjacent to the main gripping portion 31 of the control knob 30.

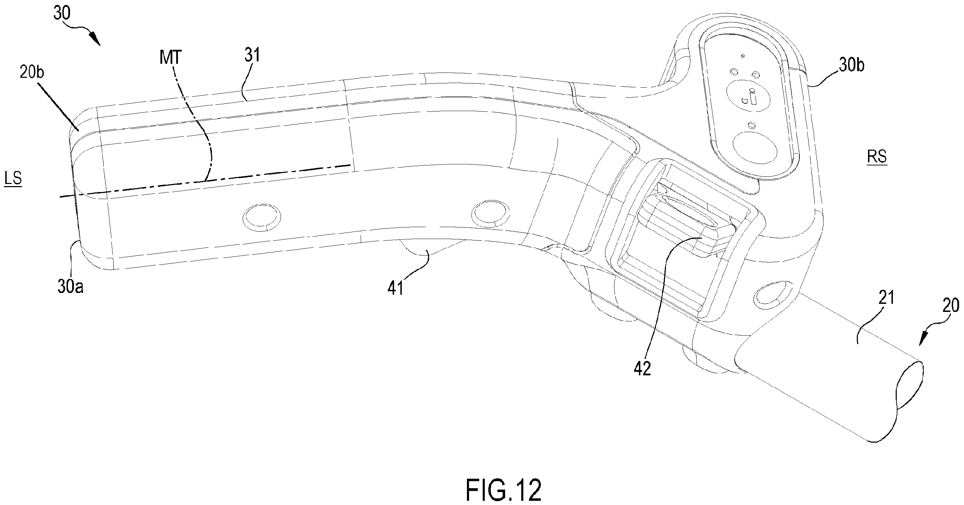

In particular, the first drive control 41 can be positioned on the main gripping portion 31 of the control knob 30, and the second drive control 42 can be positioned alongside the main gripping portion 31 of the control knob 30, as shown in detail in figure 12. The first drive control 41 can be positioned in a medial zone of the main gripping portion 31 of the control knob 30.

The operator can thus drive the second drive control 42 with the thumb of one hand, and, at the same time, drive the first drive control 41 with the remaining fingers of the same hand. In this regard, a maximum distance between the first drive control 41 and the second drive control 42 is preferably comprised between 3 cm and 30 cm, optionally between 3 and 15 cm, optionally between 4 cm and 8 cm. Similarly, a maximum distance between the second drive control 42 and the main gripping portion 31 is preferably comprised between 1 cm and 50 cm, optionally between 2 cm and 10 cm, optionally between 2 cm and 5 cm.

It should be noted that the control knob 30 shown in figure 12 has an arrangement of the drive controls 41, 42 for gripping with the left hand, the second drive control 42 being positioned to the right with respect to the first drive control 41. On the contrary, the control knob 30 shown in figures 8 and 11 has an arrangement of the drive controls 41, 42 for gripping with the right hand, in that the second drive control 42 is positioned to the left with respect to the first drive control 41.

In accordance with a first alternative of the device 1, shown in figures 1-7, 9-10 and 12, the second drive control 42 is interposed between the first drive control 41 and the second end 30b of the control knob 30 according to the width extension of the device 1. The second end 30b of the control knob 30 is defined as facing the right side of the device 1. The arrangement of the first and the second drive control in accordance with the first alternative necessarily forces the operator to position himself/herself on the left side of the device, and to grasp the main gripping portion 31 of the control knob with his/her left hand, and to grasp the auxiliary gripping portion 4 of the stem 2 with his/her right hand. In the first alternative and if the peripheral profile 21 of the handle 20 is open, the second free end portion of the peripheral profile 21 of the handle 20 faces the left side LS of the device.

Furthermore, in accordance with the first alternative and if the peripheral profile 21 of the handle 20 is open, the concavity C of the peripheral profile of the handle 20 faces the left side LS of the device.

In addition or alternatively to the features disclosed above, in the first alternative the peripheral profile 21 of the handle 20 emerges transversely, with respect to the longitudinal axis LA of the stem 2, mainly towards the right side RS of the device, so as to hinder a positioning of the operator on the right side of the device. In particular, the peripheral profile 21 of the handle 20 can emerge only towards the right side RS of the device 1.

For example in the first alternative, the peripheral profile 21 of the handle emerges transversely with respect to the longitudinal axis LA of the stem 2 towards the right side RS of the device up to a distance with respect to the stem comprised between 10 cm and 50 cm, optionally between 15 cm and 35 cm.

Similarly, in the first alternative, the peripheral profile 21 of the handle 20 may not emerge transversely with respect to the longitudinal axis of the stem towards the left side LS of the device. Alternatively, in the first alternative, the peripheral profile 21 of the handle 20 can emerge transversely with respect to the longitudinal axis of the stem towards the left side LS of the device up to a distance with respect to said stem less than 10 cm, optionally comprised between 1 cm and 10 cm, optionally between 2 cm and 5 cm.

In the first alternative, the joint 60 can then be configured to allow the work head 10 to be oriented in the right transverse operating position, and to prevent the work head 10 from being oriented in the left transverse operating position.

In accordance with a second alternative of the device, shown in figures 8 and 11, the second drive control 42 is interposed between the first drive control 41 and the first end 30a of the control knob 30 according to the width extension of the device 1. The first end 30a of the control knob 30 was defined as facing the left side of the device 1.

In the second alternative, the joint 60 is thus configured to allow the work head 10 to be oriented in the left transverse operating position, and to prevent the work head 10 from being oriented in the right transverse operating position.

In the second alternative and if the peripheral profile 21 of the handle 20 is open, the second free end portion of the peripheral profile 21 of the handle 20 faces the right side RS of the device.

Furthermore, in accordance with the second alternative and if the peripheral profile 21 of the handle 20 is open, the concavity C of the peripheral profile 21 of the handle 20 faces the right side RS of the device.

In addition or alternatively to the features disclosed above, in the second alternative the peripheral profile 21 of the handle 20 emerges transversely, with respect to the longitudinal axis LA of the stem 2, mainly towards the left side LS of the device, so as to hinder a positioning of the operator on the left side of the device. In particular, the peripheral profile 21 of the handle 20 can emerge only towards the left side LS of the device 1.

For example in the second alternative, the peripheral profile 21 of the handle emerges transversely with respect to the longitudinal axis LA of the stem 2 towards the left side LS of the device up to a distance with respect to the stem comprised between 10 cm and 50 cm, optionally between 15 cm and 35 cm.

Similarly, in the second alternative, the peripheral profile 21 of the handle 20 may not emerge transversely with respect to the longitudinal axis of the stem towards the right side RS of the device. Alternatively, in the second alternative, the peripheral profile 21 of the handle 20 can emerge transversely with respect to the longitudinal axis of the stem towards the right side RS of the device up to a distance with respect to said stem less than 10 cm, optionally comprised between 1 cm and 10 cm, optionally between 2 cm and 5 cm.

The first and the second alternative of the device, in combination with the respective selective orientation of the joint 60, allow to prevent the work head 10 from being oriented towards the side where the operator is positioned, so as to protect the operator himself/herself from any debris (e.g., stones, woods or the like) thrown by the work tool during an operating condition thereof.

The stem can further comprise an auxiliary gripping portion 4, distinct from the main gripping portion 31 of the control knob 30, configured to be grasped by the operator. For example, the main gripping portion 31 of the handle 20 is configured to be grasped by a first hand of the operator and the auxiliary gripping portion 4 of the stem 2 is configured to be grasped by a second hand of the operator.

The constraining portion 3 of the handle is interposed, according to the longitudinal axis LA of the stem, between the work head 10 and the auxiliary gripping portion 4 of the stem 2. In more detail, the auxiliary gripping portion 4 of the stem can be interposed between the constraining portion 3 of the handle and the second end portion 2b of the stem.

In particular, the auxiliary gripping portion 4 of the stem can be interposed between the constraining portion 3 of the handle and the battery housing 50.

The auxiliary gripping portion 4 of the stem 2 preferably extends in length along a straight direction parallel to the longitudinal axis LA of the stem 2. The auxiliary gripping portion 4 of the stem 2 can have a cylindrical shape with a circular section.

As shown in the attached figures, a non-limiting embodiment of the invention can envisage that the auxiliary gripping portion 4 of the stem does not comprise the drive controls 40 necessary to determine, when kept operated simultaneously, the activation of the work head 10. In particular, the auxiliary gripping portion 4 of the stem does not comprise any drive control 40 of the work head 10.

## Claims

1. Device (1) for executing maintenance operations in a land or garden, in particular suitable for use as a brush cutter or turf trimmer or hedge trimmer, said device (1) comprising:
- a stem (2) extending in length (L) along a respective longitudinal extension axis (LA) between a first end portion (2a) and a second end portion (2b),
and in which said device (1) extends in width along a respective transverse axis (TA), orthogonal to said longitudinal extension axis (LA), between a respective left side (LS) and a respective right side (RS);
- a work head (10) configured to execute said maintenance operations, said work head (10) being constrained to said stem (2) at the first end portion (2a),
- a handle (20) carried by said stem (2) and extending along a respective peripheral profile (21) away from said stem (2),
- a control knob (30), carried by said handle (20), comprising a main gripping portion (31) configured to be grasped by an operator,
- drive controls (40) configured to determine the activation of the work head (10) to execute said maintenance operations;
- an attachment system (60), interposed between the work head (10) and the first end portion (2a) of the stem (2), configured to arrange said work head (10) with respect to said stem (2) in:
∘ a left transverse operating position in which said work head faces towards said left side (LS) of the device,
or in
∘ a right transverse operating position in which said work head faces towards said right side (RS) of the device,
and in which said peripheral profile (21) of the handle (20) defines an open profile extending between a first end portion (20a), constrained to the stem (2) at a respective constraining portion (3), and a second free end portion (20b),
said open profile defining a concavity (C) facing the left side (LS) or the right side (RS) of the device,
and in which:
- in a first alternative in which said concavity (C) faces the left side (LS) of the device, the attachment system (60) is configured for:
∘ allowing said work head (10) to be oriented in the right transverse operating position, and
∘ preventing said work head (10) from being oriented in the left transverse operating position;
- in a second alternative in which said concavity (C) faces the right side (RS) of the device, the attachment system (60) is configured for:
∘ allowing said work head (10) to be oriented in the left transverse operating position, and
∘ preventing said work head (10) from being oriented in the right transverse operating position.

2. Device according to the preceding claim, wherein said work head comprises a cutting tool (11) rotatably movable about a respective rotation axis (RA),
wherein said concavity (C) of the handle is oriented along a direction parallel to said rotation axis (RA) of the cutting tool (11) when the work head (10) is positioned in one among the right transverse operating position and the left transverse operating position.

3. Device (1) according to the preceding claim, wherein:
- in the left transverse operating position, the cutting tool (11) of the work head faces said left side (LS) of the device,
- in the right transverse operating position, the cutting tool (11) of the work head faces said right side (RS) of the device.

4. Device according to any one of the preceding claims, wherein:
- in the first alternative, said peripheral profile (21) of the handle emerges transversely with respect to the longitudinal axis (LA), along the transverse axis (TA) of the device (1), mainly, and optionally only, towards the right side (RS) of the device (1),
and/or
- in the second alternative, said peripheral profile (21) of the handle emerges transversely with respect to the longitudinal axis (LA), along the transverse axis (TA) of the device (1), mainly, and optionally only, towards the left side (SS) of the device (1).

5. Device according to the preceding claim, wherein:
- in the first alternative, said peripheral profile (21) of the handle emerges transversely with respect to the longitudinal axis of the stem towards the right side (RS) of the device up to a distance with respect to said stem comprised between 10 cm and 50 cm, optionally between 15 cm and 35 cm, said distance being measured parallel to said transverse axis (AT) of the device (1),
and wherein said peripheral profile (21) of the handle:
∘ does not emerge transversely with respect to the longitudinal axis of the stem towards the left side (LS) of the device; or
∘ emerges transversely with respect to the longitudinal axis of the stem towards the left side (LS) of the device up to a distance with respect to said stem of less than 10 cm, optionally between 1 cm and 10 cm, optionally between 2 cm and 5 cm, said distance being measured parallel to said transverse axis (AT) of the device (1);
- in the second alternative, said peripheral profile (21) of the handle emerges transversely with respect to the longitudinal axis (LA) of the stem (2) towards the left side (LS) of the device (1) up to a distance with respect to said stem comprised between 10 cm and 50 cm, optionally between 15 cm and 35 cm, said distance being measured parallel to said transverse axis (AT) of the device (1),
and wherein said peripheral profile (21) of the handle:
∘ does not emerge transversely to the longitudinal axis of the stem towards the right side (RS) of the device; or
∘ emerges transversely with respect to the longitudinal axis of the stem towards the right side (RS) of the device up to a distance from said stem of less than 10 cm, optionally comprised between 1 cm and 10 cm, optionally between 2 cm and 5 cm, said distance being measured parallel to said transverse axis (AT) of the device (1).

6. Device according to any one of the preceding claims, wherein said open peripheral profile (21) of the handle is curved in a "C" shape,
wherein said main gripping portion (31) of the control knob (30) is substantially at said second end portion (20b) of the handle (20) or at a maximum distance from said second end portion (20b) of the handle (20) of less than 15 cm, optionally comprised between 1 cm and 15 cm, optionally between 1 cm and 5 cm,
and in which:
- in the first alternative, said second free end portion (20b) of the peripheral profile (21) of the handle (20) faces the left side (LS) of the device;
and/or
- in the second alternative, said second free end portion (20b) of the peripheral profile (21) of the handle (20) faces the right side (RS) of the device.

7. Device according to any one of the preceding claims, wherein said drive controls (40) comprise at least a first drive control (41) and a second drive control (42),
wherein the device is configured for:
- activating the work head (10) if the first drive control (41) and the second drive control (42) are both driven by the operator;
- preventing the activation of the work head (10) if at least one among the first drive control (41) and the second drive control (42) is not activated by the operator;
and wherein said control knob (30) is configured to allow the operator to grasp said main gripping portion (31) of the control knob (30) with one hand and, simultaneously and with the same hand, to reach and drive said first and second drive control (42) to determine the activation of the work head (10),
optionally wherein a maximum distance between said first drive control (41) and said second drive control (42) is comprised between 3 and 15 cm.

8. Device according to the preceding claim, wherein said first drive control (41) is positioned on said main gripping portion (31) of the control knob (30), and said second drive control (42) is positioned next to said main gripping portion (31) of the control knob (30),
said control knob (30) extending in length between a first end (30a) facing said left side (LS) of the device and a second end (30b) facing said right side (RS) of the device,
and in which:
- in the first alternative, said second drive control (42) is interposed between said first drive control (41) and said second end (30b) of the control knob (30) according to the transverse axis (TA) of the device (1);
and/or
- in the second alternative, said second drive control (42) is interposed between said first drive control (41) and said first end (30a) of the control knob (30) according to the transverse axis (TA) of the device (1).

9. Device according to any one of the preceding claims from 2 to 8, wherein a reference plane (RP) orthogonal to the ground (G) is defined and comprising said longitudinal extension axis (LA) of the stem (2),
wherein said attachment system (60) is configured to arrange said work head (10) in a horizontal operating position, defining a respective horizontal operating condition of the device (1), in which said work head (10) faces the ground (G),
and wherein, in said horizontal operating condition of the device (1):
- said reference plane (RP) is parallel to said rotation axis (RA) of the work tool (11), optionally in which said reference plane (RP) comprises said rotation axis (RA) of the work tool (11),
- said reference plane (RP) intersects said main gripping portion (31) of the control knob (30),
in said horizontal operating condition of the device, said rotation axis (RA) of the work tool (11) being orthogonal to the ground,
the work head (10) being, when in said horizontal operating position, angularly interposed between the left transverse operating position and the right transverse operating position.

10. Device according to the preceding claim, wherein the main gripping portion (31) of the control knob (30) extends in length along a main extension axis (MT),
said main extension axis (MT) intersecting said reference plane (RP) defining a reference angle (α) being comprised between 70° and 110°, optionally between 80° and 100°, optionally said reference angle (α) being equal to 90°.

11. Device (1) according to any one of the preceding claims 9 and 10, wherein, when the work head (10) is in one of the right transverse operating position and the left transverse operating position, said reference plane (RP) is orthogonal to the rotation axis (RA) of the cutting tool (11).

12. Device (1) according to any one of the preceding claims, wherein said attachment system (60) comprises one among:
- a connector constraining the work head (10) to the stem (2) in a fixed manner selectively in one among the left transverse operating position and the right transverse operating position and optionally in the horizontal operating position, and
- a joint configured to allow the angular orientation of said work head (10) with respect to said stem (2), said joint being configurable in:
∘ a free condition, in which the work head (10) is rotatable with respect to said stem (2) about a respective adjustment axis, and
∘ a locking condition, in which the work head (10) is fixed with respect to said stem (2).

13. Device according to the preceding claim and in combination with claim 9, wherein:
- in the first alternative, said joint is configured to allow a movement of the work head (10) between the horizontal operating position and the right transverse operating position and vice versa, and/or
- in the second alternative, said joint is configured to allow a movement of the work head (10) between the horizontal operating position and the left transverse operating position and vice versa,
and wherein said joint, in accordance with the first and/or the second alternative, is configured to allow an angular stroke of the work head (10) with respect to the stem (2) comprised between 70° and 90°, optionally equal to 90°.

14. Device (1) according to any one of the preceding claims, wherein said stem (2) comprises an auxiliary gripping portion (4), distinct from said main gripping portion (31) of the control knob (30), configured to be grasped by the operator,
and wherein said main gripping portion (31) of the handle is configured to be grasped by a first hand of the operator and the auxiliary gripping portion (4) of the stem is configured to be grasped by a second hand of the operator, wherein said constraining portion (3) of the handle (20) is interposed, according to the length extension of the stem, between the work head (10) and the auxiliary gripping portion (4) of the stem,
and wherein said auxiliary gripping portion (4) is defined by a section of the stem.

15. Device (1) according to any one of the preceding claims, wherein said drive controls (40) are carried by said control knob (30), and wherein said drive controls (40) of the control knob (30) are sufficient to determine, when kept driven simultaneously by a hand of the operator, the activation of the work head (10).
